(19) **Europäisches Patentamt**
**European Patent Office**
**Office européen des brevets**

(11) **EP 2 057 835 B1**

(12) **FASCICULE DE BREVET EUROPEEN**

(45) Date de publication et mention
de la délivrance du brevet:
**10.02.2010 Bulletin 2010/06**

(51) Int Cl.:
**H04M 9/08** (2006.01)

(21) Numéro de dépôt: **07823413.5**

(86) Numéro de dépôt international:
**PCT/FR2007/001361**

(22) Date de dépôt: **10.08.2007**

(87) Numéro de publication internationale:
**WO 2008/049982 (02.05.2008 Gazette 2008/18)**

(54) **PROCÉDÉ DE RÉDUCTION DE L'ÉCHO ACOUSTIQUE RÉSIDUEL APRÈS SUPPRESSION D'ÉCHO DANS UN DISPOSITIF "MAINS LIBRES"**

VERFAHREN ZUR UNTERDRÜCKUNG AKUSTISCHER RESTECHOS NACH ECHOUNTERDRÜCKUNG BEI EINER FREISPRECHEINRICHTUNG

METHOD OF REDUCING THE RESIDUAL ACOUSTIC ECHO AFTER ECHO REMOVAL IN A HANDS-FREE DEVICE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **26.10.2006 FR 0609395**

(43) Date de publication de la demande:
**13.05.2009 Bulletin 2009/20**

(73) Titulaire: **Parrot**
**75010 Paris (FR)**

(72) Inventeur: **SEYDOUX, Henri**
**75017 Paris (FR)**

(74) Mandataire: **Dupuis-Latour, Dominique et al**
**SEP Bardehle Pagenberg Dost Altenburg Geissler**
**10, boulevard Haussmann**
**75009 Paris (FR)**

(56) Documents cités:
**WO-A-00/25441    US-B1- 6 442 275**

**Description**

L'invention concerne de façon générale la réduction d'écho dans les dispositifs utilisant des signaux audio captés par un microphone, par exemple les téléphones, adaptateurs de type "mains-libres" et dispositifs analogues.

En particulier, l'invention peut être avantageusement appliquée à un dispositif "mains libres" utilisable en association avec un téléphone portable, notamment un dispositif "mains libres" autonome adaptable de manière amovible dans un véhicule automobile.

Plus précisément, l'écho peut résulter de deux phénomènes, de natures différentes. Le premier est l'écho dit "écho de ligne", cantonné à la voie de transmission et pour lequel on connaît diverses méthodes de filtrage ; le second est dit "écho acoustique", écho réellement capté par le microphone et dû au phénomène de réverbération de l'environnement du locuteur, typiquement la pièce où il se trouve ou bien l'habitacle d'un véhicule.

C'est à l'élimination de ce dernier type d'écho (écho acoustique que s'attache tout particulièrement la présente invention.

Cet écho acoustique constitue un élément perturbateur majeur du dispositif pouvant aller, souvent, jusqu'à rendre incompréhensible pour le locuteur distant (celui qui est à l'autre bout de la voie de transmission du signal téléphonique) les paroles du locuteur proche (celui dont les paroles sont noyées dans l'écho acoustique.

Ces appareils comportent un microphone sensible destiné à capter la parole du locuteur proche, et un haut-parleur relativement puissant reproduisant la parole du locuteur distant au cours d'une conversation téléphonique. Toutefois, par couplage acoustique entre ces deux transducteurs, le microphone capte non seulement la voix du locuteur proche, mais également le bruit environnant et, surtout, l'écho acoustique, c'est-à-dire la réverbération du son reproduit par le haut-parleur - et ceci à un niveau d'autant plus élevé que microphone et haut-parleur sont proches et que la puissance acoustique restituée par le haut-parleur est élevée. Tel est typiquement le cas des systèmes embarqués dans un véhicule automobile, où le niveau sonore du haut-parleur est relativement élevé pour couvrir les bruits environnant.

De plus, nombre de ces dispositifs sont réalisés sous la forme d'appareils autonomes, amovibles, comprenant dans un même boîtier à la fois le microphone et le haut-parleur ainsi que les boutons de commande : la proximité (quelques centimètres) entre haut-parleur et microphone entraîne alors un niveau d'écho acoustique considérable, typiquement de l'ordre de vingt fois plus élevé que le signal de parole produit par le locuteur proche.

En outre, outre l'écho acoustique, la distance importante entre microphone et locuteur entraîne dans ces dispositifs un niveau relatif de bruit élevé dans le signal capté, qui rend difficile l'extraction du signal utile noyé dans l'écho et dans le bruit. Ce bruit présente au surplus des caractéristiques spectrales non stationnaires, c'est-à-dire qui évoluent de manière imprévisible en fonction des conditions de conduite : passage sur des chaussées déformées ou pavées, autoradio en fonctionnement, etc., rendant encore plus difficile la mise au point d'algorithmes appropriés de traitement du signal.

Pour ces raisons, l'élimination de l'écho acoustique est particulièrement difficile, notamment dans les environnement très bruités, typiques des véhicules automobiles, où le bruit ambiant vient se surajouter aux signaux de parole et d'écho captés par le microphone.

Il importe également que le traitement d'élimination de l'écho n'introduise pas de distorsion sensible dans le signal utile, et ne génère pas, ou le moins possible, de "bruit musical", qui est un type de bruit strident particulièrement perceptible et désagréable à l'audition.

Les dispositifs connus les plus performants mettent en oeuvre dans de tels cas : (i) un module d'annulation d'écho, (ii) un module de suppression d'écho et (iii) un module de réduction de bruit.

Le module dit d'"annulation d'écho" (*echo cancellation*) ou AEC (*Acoustic Echo Canceller*) exécute un algorithme qui modélise le couplage acoustique microphone/haut-parleur par une transformation linéaire entre le signal du locuteur distant (c'est-à-dire le signal destiné à être reproduit par le haut-parleur) et l'écho capté par le microphone. Cette transformation définit dynamiquement un filtre adaptatif, qui est alors appliqué au signal incident provenant du locuteur distant. Le résultat de ce filtrage est alors soustrait du signal recueilli par le microphone, ce qui a pour effet d'annuler la majeure partie de l'écho acoustique.

Le module dit de "suppression d'écho" (*echo suppression*) a pour rôle de supprimer l'écho résiduel présent après traitement par le module d'annulation d'écho, en atténuant cet écho résiduel jusqu'au niveau du bruit de fond. À la différence de l'annulation d'écho qui est mise en oeuvre essentiellement par soustraction de signaux, la suppression d'écho opère par un contrôle du gain. L'inconvénient est que la réduction du gain s'applique donc également à la composante utile du signal capté par le microphone (parole du locuteur proche), puisque ce gain est appliqué indistinctement au signal incident, considéré dans sa globalité.

Enfin, le module de réduction de bruit (*noise reduction*) vise à réduire le bruit de fond capté par le microphone tout en préservant la voix du locuteur proche. Cette réduction de bruit est avantageusement opérée de façon dynamique et adaptative, en discriminant les périodes de silence de la conversation pour y identifier le bruit et caractériser le spectre de celui-ci, puis en opérant un débruitage sélectif avec une atténuation adaptée.

Le WO-A-00/25441 décrit un dispositif mettant en oeuvre les divers modules décrits ci-dessus.

Les dispositifs proposés jusqu'à présent ne donnent toutefois pas complètement satisfaction dans les configurations de double parole, en particulier dans le cas des appareils où la distance entre haut-parleur et microphone est très faible en comparaison de la distance entre locuteur proche et microphone de sorte que, comme on l'a indiqué plus haut, lorsque le locuteur distant parle le niveau de l'écho produit est considérablement supérieur au niveau moyen de la parole du locuteur proche.

Par ailleurs, le module d'annulation d'écho, qui est basé sur un filtre linéaire adaptatif, ne modélise pas parfaitement le couplage, et ne tient pas compte des non-linéarités introduites notamment au niveau de l'amplificateur et du haut-parleur, ni du bruit de fond électrique au niveau des circuits de conversion analogique/numérique. Ces divers phénomènes engendrent une instabilité dans l'algorithme d'annulation d'écho, qui doit se réadapter dans un temps très court.

L'écho résiduel après traitement par le module d'annulation d'écho peut ainsi atteindre un niveau relativement élevé, d'où l'importance de la tâche exécutée par le module de suppression de cet écho résiduel.

La difficulté de concevoir un module d'annulation d'écho performant, combinée avec la nécessité d'un traitement de réduction de l'écho résiduel par un "post-processeur", est évoquée en particulier par C. Faller et J. Chen, Suppressing Acoustic Echo in a Spectral Envelope Space, IEEE Transactions on Speech and Audio Processing, Vol. 13, No. 5, pp. 1048-1062, Sept. 2005.

Pour éviter les difficultés précitées, et pour réduire la complexité de l'algorithme de réduction de l'écho acoustique, ces auteurs préconisent une alternative à la technique d'annulation d'écho à filtre adaptatif linéaire : au lieu d'essayer de modéliser le couplage acoustique, l'algorithme analyse l'enveloppe spectrale du signal d'écho et applique directement un traitement de modification spectrale tenant compte notamment de la sélectivité fréquentielle du système auditif humain.

La technique proposée par ce document présente cependant de sérieuses limitations dans le cas de signaux dont le niveau d'écho est très élevé et dans les environnements fortement bruités, typiques des adaptateurs mains-libres utilisés dans un habitacle d'automobile, pour lesquels les techniques mettant en oeuvre dune modélisation du couplage acoustique avec filtre linéaire adaptatif se révèlent nettement plus performantes, avec une meilleure élimination de l'écho et une moindre distorsion du signal de parole.

L'un des buts de l'invention est de proposer un procédé amélioré de suppression d'écho du type précité, c'est-à-dire utilisable en combinaison avec un module d'annulation d'écho à filtre adaptatif, qui permette de préserver, dans la mesure du possible, les composantes utiles du signal tout en réduisant de façon plus accentuée la composante d'écho résiduel. Et ceci sans introduire de distorsion sensible dans le signal utile, et sans générer, ou le moins possible, de bruit musical parasite.

Un autre but de l'invention est de proposer un procédé amélioré de suppression d'écho qui puisse également assurer la réduction du bruit de fond, en discriminant la composante de bruit et la composante d'écho résiduel dans le signal capté, de manière à déterminer celle qui, compte tenu de son spectre, présente le caractère le plus dommageable par rapport à la composante utile de parole, et lui appliquer prioritairement le traitement de suppression.

Le procédé de l'invention est un procédé d'un type connu d'après le WO-A-00/25441 précité, c'est-à-dire comportant dans le domaine temporel un traitement d'annulation d'écho opérant par soustraction au signal capté d'un signal de référence délivré par un circuit adaptatif de modélisation dudit couplage acoustique. Le procédé comprend en outre, dans le domaine fréquentiel et sur des trames successives du signal, un traitement de suppression de l'écho résiduel subsistant après exécution du traitement d'annulation d'écho, et un traitement de réduction du bruit présent dans le signal après exécution du traitement d'annulation d'écho.

Le traitement dans le domaine fréquentiel de suppression de l'écho résiduel comprend une estimation des valeurs respectives de la puissance de l'écho résiduel sur une pluralité de bandes de fréquences définies pour des trames successives du signal, ainsi que le calcul et l'application d'un gain variable propre à chaque bande de fréquence et à chaque trame, le gain respectif étant d'autant plus faible que, pour la bande de fréquence considérée, la puissance relative estimée de l'écho résiduel est élevée, et inversement.

De façon caractéristique, selon un premier aspect de l'invention, le traitement comprend en outre, pour chaque bande de fréquences et pour chaque trame, une estimation *a priori* des valeurs respectives de la puissance du bruit ambiant présent dans le signal capté, et une comparaison des niveaux relatifs de la puissance du bruit et de la puissance de l'écho résiduel dans le signal capté. Le calcul dudit gain variable est alors opéré en fonction de la puissance relative estimée de l'écho résiduel lorsque le niveau de ce dernier est supérieur à celui du bruit, et en fonction de la puissance relative estimée du bruit dans le cas contraire.

De préférence, selon un second aspect de l'invention, le procédé comprend une estimation d'une probabilité de présence/absence de parole, et une pondération, par la probabilité estimée de présence/absence de parole, de la puissance relative estimée de l'écho résiduel, la valeur de la puissance étant d'autant plus réduite par cette pondération que la probabilité de parole est faible, et inversement.

Dans une forme de mise en oeuvre avantageuse, la puissance relative estimée de l'écho résiduel est donnée, pour la bande de fréquences *k* définie pour la trame *l*, par l'expression :

$$Puissance\_Echo\_res(k,l) = \frac{\left|E\{E(k,l).\overline{X}(k,l)\}\right|^2}{E\{|X(k,l)|^2\}}.(1-q_{ref}(k,l))$$

où :

$E\{\cdot\}$   représente l'espérance mathématique,
$E(k,l)$   est la transformée de Fourier discrète du signal capté après soustraction du signal de référence par le traitement d'annulation d'écho,
$X(k,l)$   est la transformée de Fourier discrète du signal de référence utilisé pour le traitement d'annulation d'écho, et
$q_{ref}(k,l)$   représente la probabilité de présence de parole.

Le calcul du gain variable peut être également opéré en fonction d'une estimation *a posteriori* des valeurs respectives de la puissance de l'écho résiduel dans le signal capté, et ceci aussi bien lorsque le niveau de l'écho résiduel est supérieur à celui du bruit que dans le cas contraire.

On va maintenant décrire un exemple de mise en oeuvre de l'invention, en référence aux dessins annexés.

La figure 1 est un schéma général montrant les différents étages impliqués dans le traitement du signal.

La figure 2 est un schéma plus détaillé montrant les différents blocs fonctionnels impliqués à la fois dans le module d'annulation d'écho et dans le module de réduction de bruit et de suppression d'écho résiduel combinées.

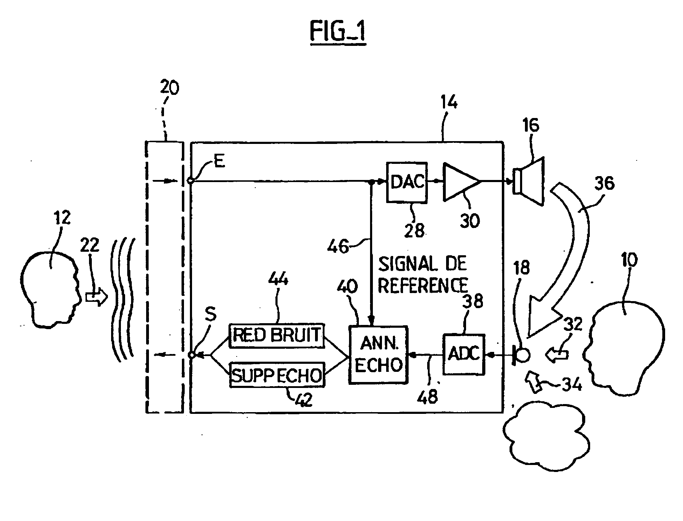

En référence à la figure 1, on va toute d'abord décrire la structure générale d'un dispositif "mains-libres" qui, de manière en elle-même connue, comprend des moyens d'annulation d'écho, de réduction d'écho et de réduction du bruit.

Un tel dispositif est destiné à supporter une conversation téléphonique entre deux personnes, à savoir un locuteur proche 10 et un locuteur distant 12. Le locuteur proche 10 est celui qui se trouve à proximité du dispositif "mains-libres" 14. Le locuteur distant 12 est celui avec lequel le locuteur proche est en conversation téléphonique.

Le dispositif 14 est typiquement un dispositif installé dans un véhicule automobile, à demeure ou de manière amovible. Il possède un haut-parleur 16 destiné à reproduire la parole du locuteur distant, et un microphone 18 destiné à capter la parole du locuteur proche 10. Le dispositif comporte également des moyens d'interfaçage, schématisés en 20, pour la transmission bidirectionnelle des signaux sur un réseau téléphonique, par exemple (mais de façon non limitative) une interface sans fil de type *Bluetooth* (marque déposée du Bluetooth SIG, Inc) ou autre permettant de coupler le dispositif 14 au téléphone cellulaire portable du locuteur proche, par lequel ce dernier est lui-même en communication radiotéléphonique avec le locuteur distant.

Le signal incident reçu sur l'entrée E du dispositif 14, qui comprend la composante de parole 22 du locuteur distant 12, est appliqué à un convertisseur numérique/analogique 28, puis en entrée d'un amplificateur audio 30 qui reproduit le signal sur le haut-parleur 16.

Le microphone 18, quant à lui, capte un signal acoustique qui sera une combinaison (i) de la parole 32 du locuteur proche 10, (ii) du bruit ambiant 34 régnant dans l'environnement de ce dernier (par exemple dans l'habitacle du véhicule automobile) et (iii) du signal 36 reproduit par le haut-parleur 16.

Le signal 36 est un signal d'écho indésirable du point de vue du microphone 18. Comme on l'a indiqué plus haut, compte tenu des niveaux de fonctionnement de l'amplificateur 30, et du couplage important tenant à la proximité entre haut-parleur 16 et microphone 18, lorsque le locuteur distant 12 parle, le niveau du signal 36 peut atteindre vingt fois celui du signal de parole 32 du locuteur proche 10.

La réduction de l'écho acoustique est opérée, après numérisation du signal du microphone 18 via l'étage de conversion analogique/numérique 38, au moyen de trois traitements successifs : (i) annulation d'écho 40, (ii) suppression d'écho 42 et (iii) réduction de bruit 44.

Ces traitements sont mis en oeuvre sous forme d'algorithmes appropriés exécutés par un microcontrôleur ou un processeur de traitement des signaux incorporé au dispositif 14. Bien que, pour la clarté de l'exposé, ces trois traitements soient présentés sous forme de modules distincts, ils mettent en oeuvre des éléments communs, et correspondent en fait à une pluralité de fonctions globalement exécutées par un même logiciel.

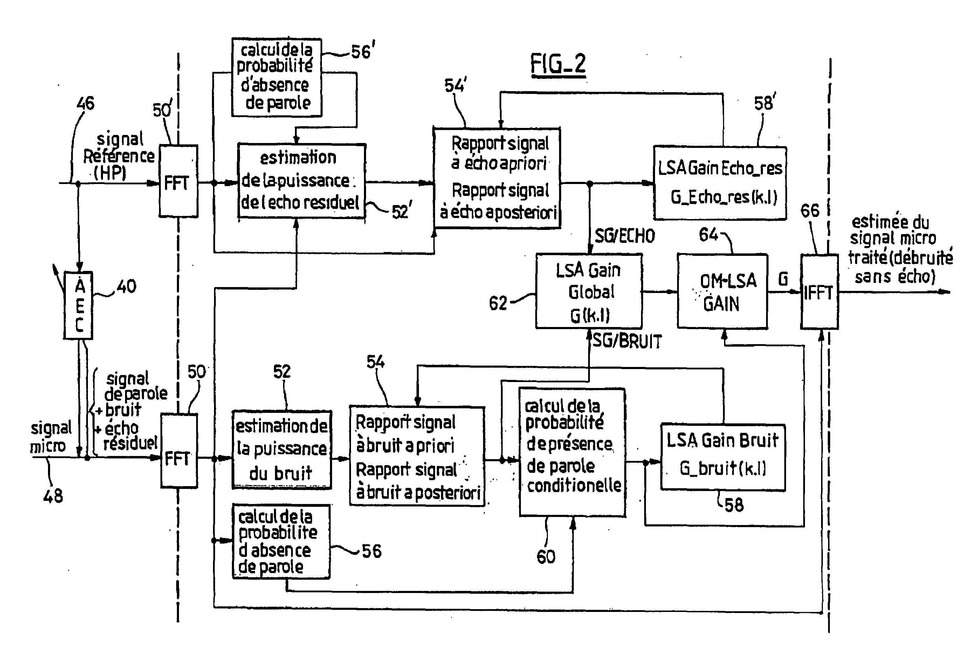

Les différents blocs fonctionnels de ce logiciel, qui opèrent un traitement du signal à la fois dans le domaine temporel (annulation d'écho 40) et dans le domaine fréquentiel (suppression d'écho 42 et réduction du bruit 44) seront exposés en détail plus bas, en référence à la figure 2.

Le premier module est le module d'annulation d'écho 40. Il n'a essentiellement pas d'effet sur la parole du locuteur proche 10 : la voix du locuteur proche est donc intacte après l'annulation d'écho 40. L'annulation d'écho consiste à définir de façon dynamique un filtre de compensation recevant en entrée un signal de référence 46 provenant du locuteur distant (signal sur l'entrée E du dispositif) de manière à soustraire du signal 48 capté par le microphone 18 un signal adapté représentatif du signal reçu, pour donner en sortie un signal débarrassé de l'écho parasite Le filtre linéaire peut être caractérisé au moyen d'un algorithme de suppression d'écho tel qu'un algorithme de type APA (Affin *Projection Algorithm*)*,* ou de type LMS (*Least Mean Squares*) ou NLMS (*Normalized LMS*).

Un tel algorithme adaptatif perfectionné de type APA est par exemple décrit dans le FR-A-2 792 146 (Parrot SA).

Toutefois, pour plusieurs raisons (identification du filtre imparfaite, modélisation linéaire approximative, présence de non-linéarités,...) il est fréquent que de l'écho reste audible après traitement par le module d'annulation d'écho 40.

Le module de suppression d'écho 42 a pour objet de supprimer cet écho résiduel, en atténuant le signal d'écho jusqu'au niveau du bruit de fond.

L'invention porte en particulier sur cette réduction d'écho résiduel, dont la manière d'opérer sera exposée plus bas.

Enfin, le module de réduction du bruit 44 a pour rôle de réduire le bruit de fond 34 capté par le microphone, tout en préservant la parole 32 du locuteur proche.

Le traitement de débruitage proprement dit est réalisé dans le domaine fréquentiel, le passage entre domaines temporel et fréquentiel étant réalisé au moyen de transformées de Fourier rapides avec fenêtrage et recouvrement. Le débruitage met en oeuvre une estimation de bruit et un calcul de gain pour chaque bande de fréquence : pendant les périodes identifiées comme des silences, le bruit capté est analysé dans ses différentes composantes fréquentielles de manière à déterminer l'énergie des composantes fréquentielles les plus bruitées et appliquer ensuite au signal bruité un gain faible, tout en laissant intactes les composant peu ou pas bruitées. Les valeurs de gain sont basées sur des modèles statistiques de la parole et du bruit et sur l'estimation de paramètres de ces modèles.

Le signal ainsi traité, débarrassé de son écho et débruité, est finalement délivré sur la sortie S du dispositif, pour transmission au locuteur distant par l'interface 20.

L'invention propose une nouvelle technique de suppression de l'écho résiduel, plus performante que les techniques employées jusqu'à présent. Ces techniques présentaient en effet un certain nombre de limitations, notamment lorsque l'écho est difficilement prédictible et peut atteindre des niveaux maxima très élevés en raison notamment de la proximité matérielle entre microphone et haut-parleur.

Le principe de base du suppresseur d'écho résiduel de l'invention consiste à utiliser une technique comparable à celle mise en oeuvre pour la réduction du bruit. En d'autre termes, on assimile l'écho résiduel à un bruit et on lui applique un traitement de soustraction spectrale et de calcul d'un gain optimal sur chacune des composantes fréquentielles.

La suppression d'écho résiduel selon l'invention consiste donc, pour une composante fréquentielle *k* et une trame (temporelle) indexée *l*, à calculer et à appliquer un gain $G\_Echo\_res(k,l)$ qui sera :

- faible lorsque les composantes fréquentielles contiennent beaucoup d'écho résiduel, et
- proche de l'unité, ou égal à l'unité, lorsque les composantes fréquentielles ne contiennent pas ou peu d'écho résiduel.

Ce traitement a pour effet de diminuer l'énergie des composantes fréquentielles où l'écho résiduel est important et de laisser intactes celles qui n'en contiennent pas.

Pour pouvoir calculer le gain, il est nécessaire d'avoir une estimation des rapports signaux à bruit *a priori* et *a posteriori,* eux-mêmes nécessitant de connaître la puissance de l'écho résiduel.

L'invention propose la méthode ci-après, avec les notations suivantes :

$y(n)$     signal capté par le microphone (signal 48),
$e(n)$     signal capté, duquel on a soustrait l'écho estimé,
$echo\_res(n)$     écho résiduel (après le traitement d'annulation d'écho),
$s(n)$     signal de parole du locuteur proche,
$n(n)$     signal de bruit de l'environnement du locuteur proche,
$x(n)$     signal de référence (signal 46 utilisé pour le traitement d'annutation d'écho),
$n$     échantillon courant,
$h$     réponse impulsionnelle réelle (inconnue) de la partie linéaire du couplage ente le haut-parleur et le microphone,
$h$     réponse impulsionnelle estimée, mise à jour à l'aide de méthodes adaptatives.
$\otimes$     représente le produit de convolution

Avec les notations précédentes, le signal capté s'exprime sous la forme :

$$y(n) = s(n) + echo(n) + n(n) . \tag{1}$$

En négligeant la partie non linéaire du couplage, on obtient la relation :

$$y(n) = s(n) + h \otimes x(n) + n(n) . \tag{2}$$

De même, il est possible d'exprimer le signal capté duquel a été soustrait l'écho estimé :

$$e(n) = s(n) + (h - \hat{h}) \otimes x(n) + n(n) . \tag{3}$$

En prenant la transformée de Fourier discrète de l'expression (3), il vient :

$$E(k,l) = S(k,l) + \alpha(k,l).X(k,l) + N(k,l) , \tag{4}$$

$k$ et $l$ représentant respectivement la composante fréquentielle (bande de fréquences) et le numéro de la trame.

Cela revient à supposer que pour chaque bande de fréquence $k$ l'écho résiduel est proportionnel au signal de référence, le paramètre $\alpha(k,l)$ correspondant à une atténuation. Tout se passe comme si l'écho résiduel était égal à la référence, atténuée de $\alpha(k,l)$.

Si l'on multiplie (4) par $\overline{X}(k,l)$ et si l'on en prend l'espérance, notée $E\{\cdot\}$ :

$$E\{E(k,l).\overline{X}(k,l)\} = \{S(k,l).\overline{X}(k,l)\} + E\{\alpha(k,l).X(k,l).\overline{X}(k,l)\} + E\{N(k,l).\overline{X}(k,l)\} \tag{5}$$

Supposons que $\alpha(k,l)$ soit indépendant de la trame considérée, c'est-à-dire que l'on a $\alpha(k,l) = \alpha(k)$. Supposons de plus que les variables $S(k,l)$ et $\overline{X}(k,l)$ et les variables $N(k,l)$ et $X(k,l)$ sont décorrélées. On les supposera également de moyenne nulle, hypothèse non restrictive pour des signaux de parole et du bruit. On obtient l'expression simplifiée (6) :

$$E\{E(k,l).\overline{X}(k,l)\} = \alpha(k).E\{|X(k,l)|^2\} . \tag{6}$$

Il est désormais possible de définir une estimation de la puissance de l'écho résiduel.

Notons $Esp\_EX(k,l) = E\{E(k,l).\overline{X}(k,l)\}$. $Esp\_EX(k,l)$ est obtenu par lissage de la trame précédente :

$$Esp\_EX(k,l) = (1 - \lambda).Esp\_EX(k,l-1) + \lambda.\overline{X}(k,l).E(k,l) ,$$

$\lambda$ étant le facteur de lissage. D'où :

$$\alpha(k,l) = \frac{Esp\_EX(k,l)}{E\{|X(k,l)|^2\}} .$$

Comme $Echo\_res(k,l) = \alpha(k,l).X(k,l)$, il vient :

$$Puissance\_Echo\_res(k,l) = E\left\{\alpha(k,l)^2.X(k,l).\overline{X}(k,l)\right\}$$

$$Puissance\_Echo\_res(k,l) = E\left\{\alpha(k,l)^2|X(k,l)|^2\right\}$$

D'où:

$$Puissance\_Echo\_res(k,l) = \frac{\left|E\left\{E(k,l).\overline{X}(k,l)\right\}\right|^2}{E\left\{|X(k,l)|^2\right\}}. \qquad (7)$$

La présence d'un bruit de fond dans le signal de référence $X$ (dû au bruit ambiant capté côté locuteur distant et au bruit introduit par la voie de transmission) entraîne l'estimation d'un écho résiduel même lorsque le locuteur distant ne parle pas, car l'espérance au numérateur ne peut être réellement nulle. Cependant, l'écho résiduel effectif introduit par ce bruit de fond coté locuteur distant n'est pas gênant.

Comme le processus de suppression d'écho résiduel par la méthode proposée entraîne une légère distorsion de la voix, il est préférable ne pas trop surestimer l'écho résiduel lorsque cela n'est pas nécessaire. C'est pourquoi, en pratique, il est souhaitable de pondérer l'expression (7) par la probabilité de présence de parole, qui vaut (1-probabilité d'absence). L'expression devient :

$$Puissance\_Echo\_res(k,l) = \frac{\left|E\left\{E(k,l).\overline{X}(k,l)\right\}\right|^2}{E\left\{|X(k,l)|^2\right\}}.(1-q_{ref}(k,l)), \qquad (8)$$

où $q_{ref}(k,l)$ représente la probabilité de présence de parole sur le signal de référence, pour la fréquence $k$ et la trame $l$.

On obtient ainsi une estimation de la puissance de l'écho résiduel, qui sera ensuite utilisée dans le calcul des rapports signaux à écho *a priori* et a *posteriori*.

Selon un autre aspect, l'invention propose de calculer un gain global, au lieu de calculer deux gains séparément après traitement par le module d'annulation d'écho (l'un pour la suppression de l'écho résiduel, fonction mise en oeuvre par le module 42 et l'autre pour la réduction du bruit, fonction mise en oeuvre par le module 44).

Ce gain global, noté G($k,l$), tiendra compte à la fois, pour une bande de fréquence $k$ et une trame $l$, de la présence du bruit et de la présence de l'écho résiduel.

La figure 2 illustre les différentes fonctions mises en oeuvre pour le calcul de ce gain G($k,l$).

Le principe de base de ce traitement est fondé sur les travaux décrits par : [1] Y. Ephraim et D. Malah, Speech Enhancement using a Minimum Mean-Square Error Short-Time Spectral Amplitude Estimator, IEEE Transactions on Acoustics, Speech, and Signal Processing, Vol. ASSP-32, No 6, pp. 1109-1121, Dec. 1984, et [2] Y. Ephraim et D. Malah, Speech Enhancement using a Minimum Mean-Square Error Log-Spectral Amplitude Estimator, IEEE Transactions on Acoustics, Speech, and Signal Processing, Vol. ASSP-33, No 2, pp. 443-445, April 1985.

Comme indiqué plus haut, l'invention propose d'utiliser ces techniques, initialement conçues pour le débruitage, pour la suppression de l'écho résiduel après annulation d'écho.

Essentiellement, le signal contenant l'écho résiduel est analysé en composantes fréquentielles indépendantes par une transformée de Fourier discrète. Un gain optimal est calculé et appliqué sur chacune de ces composantes puis le signal ainsi traité est recombiné dans le domaine temporel. Dans [1], le gain appliqué est nommé "gain STSA" (*Short-Time Spectral Amplitude*) et permet de minimiser la distance quadratique moyenne entre le signal estimé (à la sortie de l'algorithme) et le signal de parole original (non bruité). Dans [2], l'application d'un gain nommé "gain LSA" (*Log-Spectral Amplitude*) permet de minimiser la distance quadratique moyenne entre le logarithme de l'amplitude du signal estimé et le logarithme de l'amplitude du signal de parole original. Ce second critère se montre supérieur au premier car la distance choisie est meilleure adéquation avec le comportement de l'oreille humaine et donne donc qualitativement de meilleurs résultats.

Dans tous les cas, l'idée essentielle est de diminuer l'énergie des composantes fréquentielles très parasitées en leur appliquant un gain faible, tout en laissant intactes (par l'application d'un gain égal à 1) celles qui le sont peu ou pas du tout.

La mise en oeuvre de ce traitement permet de calculer une valeur $G(k,l)$ pour le gain LSA. Un algorithme de type "OM-LSA" (*Optimally-Modified Log-Spectral Amplitude*), permet d'améliorer le calcul du gain LSA à appliquer, en le pondérant par la probabilité conditionnelle de présence de parole, selon une technique décrite notamment par :
[3] I. Cohen, Optimal Speech Enhancement Under Signal Presence Uncertainty Using Log-Spectral Amplitude Estimator, IEEE Signal Processing Letters, Vol. 9, No 4, April 2002.

Plus précisément, comme illustré figure 2, le traitement est opéré à partir, d'une part, du signal 48 capté par le microphone après annulation d'écho par le module 40 (AEC, *Acoustic Echo Canceller*) et, d'autre part, à partir du signal de référence 46 représentatif du signal reproduit par le haut-parleur.

Le passage dans le domaine fréquentiel de ces deux signaux 46, 48 est obtenu par une transformation de Fourier rapide FFT (blocs 50, 50').

Pour le débruitage, le signal est soumis à un traitement tel que celui décrit dans les références [1] et [2], avec estimation de la puissance du bruit dans les différentes bandes de fréquences et pour une trame de signal donnée (bloc 52) et détermination d'un rapport signal à bruit *a priori* (bloc 54). Ce signal permet également de calculer une probabilité d'absence de parole (bloc 56). Un traitement par un algorithme de recherche des moindres carrés LSA (bloc 58) permet, par rebouclage, d'obtenir un rapport signal à bruit *a posteriori* (bloc 54) après pondération par la probabilité de présence de parole conditionnelle (bloc 60). On obtient ainsi, pour chaque composante fréquentielle (bande de fréquence) $k$ de chaque trame indexée $l$, une valeur de rapport signal à bruit *a priori* et une valeur de signal à bruit *a posteriori.* Pour plus de détails sur ces algorithmes de réduction d'écho, on pourra se référer aux références [1] et [2] précitées. La référence [3] précitée indique, quant à elle, la manière de pondérer le gain par la probabilité conditionnelle de présence de parole.

Si l'on désigne les rapports signal à bruit *a priori* et signal à bruit a *posteriori* respectivement par $SNR\_prio(k,l)$ et $SNR\_post(k,l)$, la référence [3] donne, pour l'expression du gain $G\_bruit(k,l)$, en fonction des paramètres $\xi(k,l) = SNR\_prio(k,l)$ et $\gamma(k,l) = SNR\_post(k,l)$:

$$G\_bruit(k,l) = G\_bruit(\xi(k,l),\gamma(k,l)) = \frac{\xi(k,l)}{\xi(k,l)+1}\exp\left\{\frac{1}{2}\int_{v(k,l)}^{+\infty}\frac{e^{-t}}{t}dt\right\} \qquad (9)$$

avec $v(k,l) = \dfrac{\xi(k,l)}{\xi(k,l)+1}\cdot\gamma(k,l)$

L'invention propose d'opérer un traitement semblable à celui que l'on vient de décrire, pour calculer un rapport non plus signal à bruit mais signal à écho (ici et dans la suite, par simplification, par "écho" on entendra bien évidemment l'écho résiduel, que l'on cherche à minimiser).

Les rapports signal à écho *a priori* et signal à écho *a posteriori* sont notés respectivement $SER\_prio(k,l)$ et $SER\_post(k,l)$. Ces rapports sont calculés par les blocs fonctionnels 52', 54', 56' et 58' de la figure 2, qui exécutent des algorithmes semblables à ceux des blocs homologues 52, 54, 56 et 58 décrits plus haut à propos du traitement du bruit. Ce calcul est opéré à partir des données produites par application d'une transformée de Fourier rapide FFT 50' au signal de référence 46.

Les valeurs des rapports signal à écho *a priori* et *a posteriori,* et des rapports signal à bruit *a priori* et *a posteriori* sont ainsi connues, et appliquées conjointement à l'algorithme de calcul du gain LSA (bloc 62).

Le gain OM-LSA est calculé par le bloc 64. Une transformation de Fourier inverse (bloc 66) restitue en sortie le signal du microphone, débruité et sans écho.

L'invention propose, pour le calcul du gain global $G(k,l)$, c'est-à-dire du gain tenant compte à la fois de l'écho et du bruit, d'utiliser l'expression (9) ci-dessus donnée pour le calcul du bruit, mais en sélectionnant des paramètres $\xi(k,l)$ et $\gamma(k,l)$ dépendant à la fois des rapports signal à bruit et des rapports signal à écho.

On peut notamment utiliser, en lieu et place des paramètres $\xi(k,l)$ et $\gamma(k,l)$, les paramètres $\xi'(k,l)$ et $\gamma'(k,l)$ tels que :

$$\xi'(k,l) = \min(SER\_prio(k,l),SNR\_prio(k,l)) \qquad (10)$$

$$\gamma'(k,l) = SER\_post(k,l) \qquad (11)$$

En effet, si l'écho résiduel est supérieur au bruit, le rapport signal à écho sera plus faible que le rapport signal à bruit ; on choisira donc le paramètre *SER_prio(k,l)* pour appliquer un gain qui réduira plutôt l'écho. Dans cette situation, en fait l'écho masque le bruit, et l'on cherchera alors à ramener l'écho au niveau du bruit.

Inversement, si le bruit est supérieur à l'écho résiduel, le rapport signal à bruit est plus faible que le rapport signal à écho, et on choisira le paramètre *SNR_ prio(k,l)* pour appliquer un gain qui réduira plutôt le bruit.

En d'autres termes, en prenant le minimum du *SER_ prio(k,l)* et du *SNR _ prio(k,l),* on se place toujours dans le cas le plus favorable, car on cherchera toujours à réduire la composante parasite la plus dommageable.

Le même raisonnement pourrait être appliqué au paramètre γ(k,l), en prenant le minimum des rapports signal à bruit et signal à écho a *posterio*ri. Toutefois, en pratique, on constate que l'utilisation, dans tous les cas, du rapports signal à écho *a posteriori* introduit moins de bruit musical dans le signal restitué.

On obtient donc la valeur du gain tenant compte de l'écho et du bruit :

$$G(k,l) = G(\xi'(k,l),\gamma'(k,l)) = \frac{\xi'(k,l)}{\xi'(k,l)+1} \exp\left\{ \frac{1}{2} \int\limits_{v'(k,l)}^{+\infty} \frac{e^{-t}}{t} dt \right\} \qquad (11)$$

avec $v'(k,l) = \dfrac{\xi'(k,l)}{\xi(k',l)+1} \cdot \gamma(k',l)$

## Revendications

1. Un procédé de traitement d'un signal audio capté par le microphone (18) d'un dispositif "mains libres" (14) comportant également un haut-parleur (16) susceptible d'introduire par couplage acoustique avec le microphone un écho acoustique parasite,

   le signal capté par le microphone comportant une composante utile de parole (32), une composante parasite d'écho acoustique (36) et une composante parasite de bruit ambiant (34),

   ce procédé comprenant, dans le domaine temporel :

   - un traitement d'annulation d'écho (40) opérant par soustraction au signal capté d'un signal de référence délivré par un circuit adaptatif de modélisation dudit couplage acoustique,
   ce procédé comprenant en outre, dans le domaine fréquentiel et sur des trames successives du signal :
   - un traitement de suppression de l'écho résiduel (42) subsistant après exécution du traitement d'annulation d'écho, comprenant :

   • une estimation des valeurs respectives de la puissance de l'écho résiduel sur une pluralité de bandes de fréquences définies pour des trames successives du signal, et
   • le calcul, et l'application, d'un gain variable propre à chaque bande de fréquence et à chaque trame, le gain respectif étant d'autant plus faible que, pour la bande de fréquence considérée, la puissance relative estimée de l'écho résiduel est élevée, et inversement ; et

   - un traitement de réduction du bruit (44) présent dans le signal après exécution du traitement d'annulation d'écho, procédé **caractérisé :**
   - **en ce qu'**il comprend en outre, pour chaque bande de fréquences et pour chaque trame :

   . une estimation a *priori* des valeurs respectives de la puissance du bruit ambiant présent dans le signal capté, et
   • une comparaison des niveaux relatifs de la puissance du bruit et de la puissance de l'écho résiduel dans le signal capté,

- et **en ce que** le calcul dudit gain variable est opéré en fonction de la puissance relative estimée de l'écho résiduel lorsque le niveau de ce dernier est supérieur à celui du bruit, et en fonction de la puissance relative estimée du bruit dans le cas contraire.

**2.** Le procédé de la revendication 1, comprenant en outre :

• une estimation d'une probabilité de présence/absence de parole, et
• une pondération, par la probabilité estimée de présence/absence de parole, de la puissance relative estimée de l'écho résiduel, la valeur de la puissance étant d'autant plus réduite par cette pondération que la probabilité de parole est faible, et inversement.

**3.** Le procédé de la revendication 2, dans lequel la puissance relative estimée de l'écho résiduel est donnée, pour la bande de fréquences $k$ définie pour la trame $l$, par l'expression :

$$Puissance\_Echo\_res(k,l) = \frac{\left|E\{E(k,l).\overline{X}(k,l)\}\right|^2}{E\{|X(k,l)|^2\}}.(1 - q_{ref}(k,l))$$

où:

$E\{\cdot\}$ représente l'espérance mathématique,
$E(k,l)$ est la transformée de Fourier discrète du signal capté après soustraction du signal de référence par le traitement d'annulation d'écho,
$X(k,l)$ est la transformée de Fourier discrète du signal de référence utilisé pour le traitement d'annulation d'écho, et
$q_{ref}(k,l)$ représente la probabilité de présence de parole.

**4.** Le procédé de la revendication 1, dans lequel le calcul dudit gain variable est opéré également en fonction d'une estimation a *posteriori* des valeurs respectives de la puissance de l'écho résiduel dans le signal capté.

**5.** Le procédé de la revendication 4, dans lequel le calcul dudit gain variable est opéré en fonction de l'estimation *a posteriori* des valeurs respectives de la puissance de l'écho résiduel dans le signal capté, aussi bien lorsque le niveau de l'écho résiduel est supérieur à celui du bruit que dans le cas contraire.

**Claims**

**1.** A method for processing an audio signal captured by the microphone (18) of a "hands free" device(14) also comprising a loudspeaker (16) adapted to introduce through acoustic coupling with the microphone a parasitical acoustical echo, wherein the signal captured by the microphone comprises a useful speech component (32), a parasitical acoustic echo component (36) and an ambient noise component (34),
wherein said method comprises in the time domain :

- an echo cancellation processing step (40) operating by subtracting from captured signal a reference signal that is provided by an adaptive modeling circuit of said acoustical coupling,

wherein said method furthermore comprises in the frequency domain and on successive signal frames :

- a processing step (42) of the residual echo cancellation remaining after performing the echo cancellation processing step comprising :

. estimating the respective values of the residual echo power on a plurality of frequency bands defined for successive frames of the signal, and
. calculating and applying a variable gain belonging to each frequency band and to each frame, wherein the higher the estimated relative power of the residual echo, the less is the respective gain for the considered frequency band, and conversely; and

- a processing step (44) for reducing the noise present after performing the echo cancellation processing step,

wherein said method is **characterized in that** :

- it furthermore comprises for each frequency band and for each frame :

. an a priori estimation of the respective values of the power of the ambient noise present in the captured signal, and
. a comparison of the relative levels of the noise and of the residual echo power in the captured signal,

- and **in that** calculation of said variable gain is performed as a function of the estimated relative power of the residual echo when the level of latter is higher than that of the noise, and as a function of the estimated relative power of the noise in the contrary case.

2. The method according to claim 1, furthermore comprising :

. an estimation of a probability of speech presence/absence, and
. a weighting, based on the estimated probability of speech presence/absence, of the residual echo estimated relative power, wherein the less the speech probability, the more the power value is reduced through said weighting, and conversely.

3. The method according to claim 2, wherein the residual echo estimated relative power is given, for the frequency band $k$ defined by the frame $l$, by following expression :

$$Puissance\_Echo\_res(k,l) = \frac{\left|E\{E(k,l).\bar{X}(k,l)\}\right|^2}{E\{|X(k,l)|^2\}}.(1 - q_{ref}(k,l))$$

wherein

$E\{.\}$ is the mathematical expectation,
$E(k,l)$ is the discrete Fourier transform of the captured signal after subtraction of the reference signal through the echo cancellation processing step,
$X(k,l)$ is the discrete Fourier transform of the reference signal used for the echo cancellation processing step, and
$q_{ref}(k,l)$ is the probability of speech presence.

4. The method according to claim 1, wherein the calculation of said variable gain is also performed as a function of an a posteriori estimation of the respective values of the residual echo power in the captured signal.

5. The method according to claim 4, wherein the calculation of said variable gain is performed as a function of the a posteriori estimation of the respective values of the residual echo power in the captured signal, as well when the residual echo level is higher that of the noise as in the contrary case.

**Patentansprüche**

1. Ein Signalverarbeitungsprozess eines durch das Mikrofon (18) einer Freisprecheinrichtung (14) aufgefangenen Audiosignals, die auch einen Lautsprecher (16) aufweist, der geeignet ist, durch akustische Kopplung mit dem Mikrofon ein akustisches Störecho einzuspeisen, wobei das durch das Mikrofon aufgefangene Signal eine Sprachnutzkomponente (32), eine akustisches Echo-Störkomonente (36) und eine Umgebungsgeräusch-Störecho (34) aufweist,
wobei genanntes Prozess im Zeitbereich

- eine Echokompensationsverarbeitungsstufe (40) aufweist, die das durch einen adaptiven Modelisationsschaltkreis genannter akustischen Kopplung gelieferten Bezugssignal vom aufgefangenen Signal subtrahiert,
wobei genanntes Prozess ausserdem im Frequenzbereich und auf aufeinanderfolgenden Rastern des Signals
- eine Verarbeitungsstufe (42) zur Unterdrückung des nach der Ausführung der Echokompensationsverarbeitungsstufe verbleibenden Restechos, umfassend :

. eine Abschätzung der respektiven Werte der Leistung des Restechos auf einer Vielzahl von für aufeinanderfolgende Signalraster bestimmten Frequenzbändern, und
. die Berechnung und das Anlegen eines zu jedem Frequenzband und jedem Raster gehörigen veränderlichen Gewinns, wobei der respektive Gewinn umso schwacher ist, als für das betrachtete Frequenzband die relative abgeschätzte Leistung des Restechos grösser ist, und umgekehrt, und

- eine Verarbeitungsstufe (44) zur Reduktion des im Signal nach Ausführung der Echokompensationsverarbeitungsstufe anwesenden Geräusches
umfasst,
**dadurch gekennzeichnet, dass**
- es ausserdem für jedes Frequenzband und jeden Raster,

. eine a priori Abschätzung der respektiven Werte der Leistung des im aufgefangenen Signal anwesenden Umgebungsgeräusches, und
. einen Vergleich der relativen Pegel der Geräuschleistung und der Leistung des Restechos im aufgefangenen Signal,
umfasst

- und die Berechnung genanntes veränderlichen Gewinns in Abhängigkeit von der abgeschätzten Relativleistung des Restechos ausgeführt wird, wenn der Pegel letzteres grösser ist als jener des Geräusches und widrigenfalls in Abhängigkeit von der abgeschätzten relativen Geräuschleistung.

2. Das Prozess gemäss Anspruch 1, umfassend ausserdem :

. eine Abschätzung der Sprach-Vorhandenheits/Abwesenheits-Wahrscheinlichkeit, und
. eine die abgeschätzte Sprach-Vorhandenheits/Abwesenheits-Wahrscheinlichkeit verwendende Gewichtung der abgeschätzten relativen Leistung des Restechos, wobei Leistungswert wegen genannter Gewichtung umso mehr reduziert wird, als die Sprachwahrscheinlichkeit schwacher ist und umgekehrt.

3. Das Prozess gemäss Anspruch 2, in welchem die abgeschätzte relative Leistung des Restechos für den für den Raster *l* bestimmten Frequenzband *k* durch folgenden Ausdruck gegeben ist :

$$Puissance\_Echo\_res(k,l) = \frac{\left|E\left\{E(k,l).\overline{X}(k,l)\right\}\right|^2}{E\left\{|X(k,l)|^2\right\}}.(1-q_{ref}(k,l))$$

worin

$E\{\cdot\}$ die mathematische Erwartung angibt,
$E(k,l)$ die diskrete Fouriertransformierte des nach dem Subtrahieren des Bezugssignals durch das Echokompensationsverarbeitungsstufe aufgefangenen Signals ist,
$X(k,1)$ die diskrete Fouriertransformierte des für die Echokompensationsverarbeitungsstufe gebrauchten Bezugssignals ist, und
$q_{ref}(k,l)$ die Sprach-Vorhandenheitswahrscheinlichkeit angibt.

4. Das Prozess gemäss Anspruch 1, in welchem die Berechnung genanntes veränderlichen Gewinns ebenso in Abhängigkeit einer a posteriori Abschätzung der respektiven Werte der Leistung des Restechos im aufgefangenen Signal ausgeführt wird.

5. Das Prozess gemäss Anspruch 4, in welchem die Berechnung genanntes veränderlichen Gewinns in Abhängigkeit der a posteriori Abschätzung der respektiven Werte der Leistung des Restechos im aufgefangenen Signal ausgeführt wird, sowohl wenn der Restechopegel grösser ist als der Geräuschpegel als widrigenfalls

## FIG_1

SIGNAL DE REFERENCE

RED BRUIT

SUPP ECHO

ANN. ECHO

DAC

ADC

FIG_2

- calcul de la probabilité d'absence de parole — 56'
- 46 — signal Référence (HP)
- 50' — FFT
- estimation de la puissance de l'echo résiduel — 52'
- 54' — Rapport signal à echo apriori / Rapport signal à echo aposteriori
- 58' — LSA Gain Echo_res G_Echo_res(k.l)
- 40 — AEC
- SG/ECHO
- 62 — LSA Gain Global G(k.l)
- 64 — OM-LSA GAIN
- 66 — IFFT
- G
- estimée du signal micro traité(débruité sans écho)
- 48 — signal micro / signal de parole + bruit + écho résiduel
- 50 — FFT
- 52 — estimation de la puissance du bruit
- 54 — Rapport signal à bruit a priori / Rapport signal à bruit a posteriori
- 60 — calcul de la probabilité de présence de parole conditionelle
- 58 — LSA Gain Bruit G_bruit(k.l)
- 56 — calcul de la probabilité d'absence de parole
- SG/BRUIT

EP 2 057 835 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0025441 A

- FR 2792146 A

**Littérature non-brevet citée dans la description**

- **C. Faller ; J. Chen.** Suppressing Acoustic Echo in a Spectral Envelope Space. *IEEE Transactions on Speech and Audio Processing,* Septembre 2005, vol. 13 (5), 1048-1062
- **Y. Ephraim ; D. Malah.** Speech Enhancement using a Minimum Mean-Square Error Short-Time Spectral Amplitude Estimator. *IEEE Transactions on Acoustics, Speech, and Signal Processing,* Décembre 1984, vol. ASSP-32 (6), 1109-1121

- **Y. Ephraim ; D. Malah.** Speech Enhancement using a Minimum Mean-Square Error Log-Spectral Amplitude Estimator. *IEEE Transactions on Acoustics, Speech, and Signal Processing,* Avril 1985, vol. AS-SP-33 (2), 443-445
- **I. Cohen.** Optimal Speech Enhancement Under Signal Presence Uncertainty Using Log-Spectral Amplitude Estimator. *IEEE Signal Processing Letters,* Avril 2002, vol. 9 (4